## Europäisches Patentamt
## European Patent Office
## Office européen des brevets

(19)

(11) Veröffentlichungsnummer: **0 132 801**
**B1**

(12) # EUROPÄISCHE PATENTSCHRIFT

(45) Veröffentlichungstag der Patentschrift:
**15.10.86**

(21) Anmeldenummer: **84108593.9**

(22) Anmeldetag: **20.07.84**

(51) Int. Cl.⁴: **F 03 B 1/00**

(54) **Durchströmturbine.**

(30) Priorität: **29.07.83 DE 3327457**

(43) Veröffentlichungstag der Anmeldung:
**13.02.85 Patentblatt 85/7**

(45) Bekanntmachung des Hinweises auf die Patenterteilung:
**15.10.86 Patentblatt 86/42**

(84) Benannte Vertragsstaaten:
**AT CH DE FR GB IT LI**

(56) Entgegenhaltungen:
**DE-C-383 134**
**DE-C-815 780**

**PATENTS ABSTRACTS OF JAPAN, Band 7, Nr.
197(M-239)(1342), 27. August 1983; & JP - A - 58 96179
(HITACHI SEISAKUSHO K.K.) 08.06.1983
VDI-NACHRICHTEN, V1401, Band 26, Nr. 4, 27. Juni
1962, VDI Verlag, Düsseldorf, DE; K. HAMERAK:
"Auch kleine Wasserkräfte können wirtschaftlich
genutzt werden"**

(73) Patentinhaber: **Ossberger- Turbinenfabrik GmbH &
Co, Otto- Rieder- Strasse 7, D-8832 Weissenburg
(DE)**

(72) Erfinder: **Ossberger, Karl- Friedrich, Dr., Otto-
Rieder- Strasse 3, D-8832 Weissenburg (DE)**
Erfinder: **Partzsch, Peter, Am Bergwaldtheater 4,
D-8832 Weissenburg (DE)**

(74) Vertreter: **Dipl.- Ing. H. Hauck Dipl.- Phys. W.
Schmitz Dipl.- Ing. E. Graalfs Dipl.- Ing. W.
Wehnert Dr.- Ing. W. Döring, Mozartstrasse 23,
D-8000 München 2 (DE)**

EP 0 132 801 B1

# Beschreibung

Die Erfindung betrifft eine Durchströmturbine mit einem stoßfrei angeströmten Laufrad, das radial von außen nach innen, im Inneren außermittig und dann radial von innen nach außen durchströmt wird, einem das Laufrad aufnehmenden Gehäusekanal, der einen Einlauf sowie einen Austrittsbereich aufweist, einer im Einlauf drehbar angeordneten Leitschaufel, die einen vorderen Nasenabschnitt und eine dazu schräg verlaufende Abströmkante aufweist und die den Einlauf in einer Schließstellung durch Anlage an gegenüberliegenden Gehäusewänden verschließt und den Einlauf in ihren übrigen Stellungen in zwei Einlaufkanäle unterteilt, einem am Einlauf angeschlossenen Zuströmrohr und einem am Austrittsbereich angeschlossenen Abströmrohr, das vertikal verläuft und als Saugrohr ausgebildet ist.

Durchströmturbinen dieser Gattung sind z.B. aus Lueger, Lexikon der Technik, Band 6, S. 258 oder den DE—A—707 839, 815 780 und 895 279 der Anmelderin bekannt. Bei diesen Durchströmturbinen ist das Zuströmrohr vertikal verlaufend angeordnet. Zur Erzielung eines stoßfreien Eintrittes der Strömung in das Laufrad verleihen die Leitschaufel und der Einlauf des Gehäusekanals der Strömung eine solche Richtung, daß die Resultierende der Strömung bei Eintritt in das Laufrad eine im wesentlichen vertikale Komponente besitzt. Dies wiederum hat zur Folge, daß die Strömung mit einer beträchtlichen horizontalen Bewegungskomponente aus dem Laufrad austritt, was zu Abström- und Verwirbelungsverlusten führt.

Aus der JP—A—58/96179 ist eine Durchströmturbine etwas anderer Gattung bekannt, bei der das Zuströmrohr horizontal verläuft und im Einlauf unterhalb der Leitschaufel eine zweite Leitschaufel angeordnet ist, die in der Schließstellung mit ihrer Abströmkante an der Unterseite der Hauptleitschaufel anliegt. Sind beide Leitschaufeln voll aufgedreht, so sind die Oberseite der Abströmkante der Hauptleitschaufel und die dazu benachbarte Gehäusewand in Strömungsrichtung nach oben verlaufend unter einem kleinem Winkel geneigt, während die Unterseite der Hauptleitschaufel zusammen mit der entsprechend gekrümmten Oberseite der in der Wand angeordneten Leitschaufel in Strömungsrichtung schräg nach oben unter einem größeren Winkel geneigt sind. Wie auch bei anderen vorbekannten Durchströmturbinen mit horizontaler Zuströmung (dort allerdings ohne Leitschaufel, vgl. z.B. DE—A—178 228) dürfte bei der Durchströmturbine nach der japanischen Patentanmeldung die Strömung mit einer beträchtlichen horizontalen Bewegungskomponente aus dem Laufrad austreten.

Aus dem Stand der Technik (vgl. z.B. DE—A—347 271, 383 134 und 388 530) sind bereits Durchströmturbinen bekannt, bei denen die Strömung zumindest theoretisch im wesentlichen in vertikaler Richtung aus dem Laufrad austritt. Da es sich hierbei um Durchströmturbinen ohne Leitschaufel handelt, dürfte es in der Praxis kaum möglich sein, tatsächlich einen vertikalen Strömungsaustritt aus dem Laufrad zu erzielen.

Der Erfindung liegt die Aufgabe zugrunde, eine Durchströmturbine der eingangs angegebenen Gattung so weiterzubilden, daß die Strömungsverluste im Austrittsbereich des Gehäusekanals verringert werden.

Diese Aufgabe wird bei einer Durchströmturbine der eingangs angegebenen Gattung dadurch erricht, daß bei Verwendung eines horizontal verlaufenden Zuströmrohrs der Gehäusekanal und die Leitschaufel so ausgebildet sind, daß bei voll aufgedrehter Leitschaufel die Oberseite der Abströmkante und die dazu benachbarte Gehäusewand in Strömungsrichtung nach unten verlaufend unter einem Winkel von 12° bis 20°, vorzugsweise 16° zur Horizontalen geneigt sind und die Unterseite des Nasenabschnittes und die dazu benachbarte Gehäusewand in Strömungsrichtung schräg nach oben unter einem Winkel von 40° bis 50°, vorzugsweise 45° geneigt sind, so daß die Resultierende der Strömung beim Eintritt in das Laufrad schräg nach unten unter einem Winkel von 30° bis 50°, vorzugsweise 40° zur Horizontalen geneigt und beim Austritt aus dem Laufrad im wesentlichen vertikal gerichtet ist.

Hierdurch wird erreicht, daß trotz Verwendung eines horizontal verlaufenden Zuströmrohres die Strömung aus dem Laufrad in im wesentlichen vertikaler Richtung austritt. Dies verringert die Abström- und Verwirbelungsverluste im Austrittsbereich des Gehäusekanals.

Bei Durchströmturbinen der angegebenen Gattung sollte das Saugrohr einen möglichst großen Querschnitt haben. Um den Gehäusekanal auf den Querschnitt des Saugrohrs zu erweitern, ist bei den vorbekannten Durchströmturbinen (z.B. DE—PS 815 780) der Austrittsbereich des Gehäusekanals auf der dem Zuströmrohr abgewandten Seite des Laufrades mit einem bogenförmig gekrümmten Seitenraum versehen. Dieser Seitenraum wird über ein federbelastetes Belüftungsventil von der Atmosphäre her so belüftet, daß der Unterdruck im Saugrohr nicht unter einen vorgegebenen Wert abfallen kann, damit der Pegel des Wassers im Saugrohr unter dem untersten Punkt des Laufrades bleibt.

Da bei der erfindungsgemäß ausgebildeten Durchströmturbine die Strömung aus dem Laufrad im wesentlichen in vertikaler Richtung austritt, kann der Austrittsbereich des Gehäusekanals zu beiden Seiten des Laufrades erweitert werden. Auf der dem ersten Seitenraum gegenüberliegenden Seite des Laufrades ist daher in vorteilhafter Ausgestaltung der Erfindung eine den Querschnitt des Gehäusekanals ebenfalls erweiternder zweiter Seitenraum vorgesehen.

Dieser zweite Seitenraum wird zweckmäßigerweise ebenfalls von der Atmosphäre her belüftet, um dort andernfalls auftretende Verwirbelungsverluste zu vermeiden.

Weitere vorteilhafte Ausgestaltungen der Erfindung gehen aus den Unteransprüchen hervor.

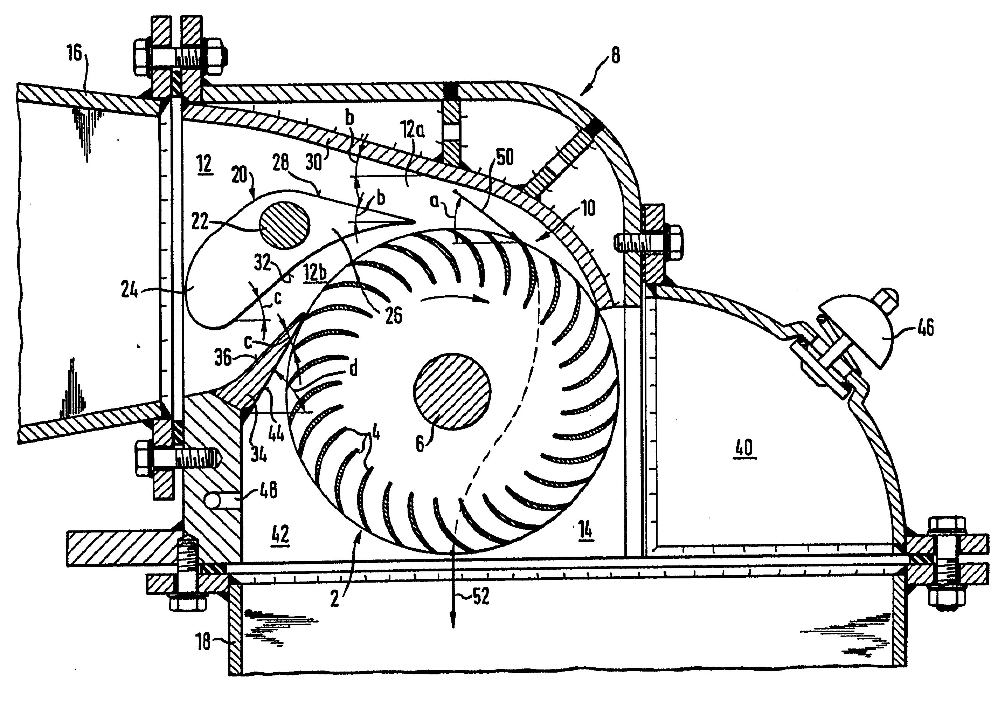

Anhand der einzigen Figur, die einen Querschnitt durch eine erfindungsgemäß ausgebildete Durchströmturbine zeigt, wird ein Ausführungsbeispiel der Erfindung erläutert.

Die in der Zeichnung dargestellte Durchströmturbine besitzt ein Laufrad 2 mit einem Kranz von kreisbogenförmig ausgebildeten Schaufeln 4. Das auf einer horizontalen Welle 6 montierte Laufrad 2 läuft in einem von einem Gehäuse 8 gebildeten Gehäusekanal 10 um.

Der Gehäusekanal 10 besitzt einen Einlauf 12 sowie einen Austrittsbereich 14. Am Einlauf 12 ist ein horizontal verlaufendes Zuströmrohr 16 von rechteckigem Querschnitt angeschlossen, während der Austrittsbereich 14 in ein vertikal verlaufendes, als Saugrohr dienendes Abströmrohr 18, ebenfalls von rechteckigem Querschnitt, übergeht.

Im Einlauf 12 ist eine Leitschaufel 20 angeordnet, die mittels einer Welle 22 um eine horizontale Achse drehbar ist. Die Leitschaufel 20 besitzt einen vorderen Nasenabschnitt 24 und eine dazu um ungefähr 45° geneigte Abströmkante 26.

Die Leitschaufel 20 unterteilt in ihrer (in der Zeichnung dargestellten) voll aufgedrehten Stellung den Einlauf 12 in zwei Einlaufkanäle 12a und 12b. Der Einlaufkanal 12a wird von der geradlinigen Oberseite 28 der Abströmkante 26 und einer dazu benachbarten, ebenfalls geradlinigen Gehäusewand 30 begrenzt. Die Oberseite 28 der Abströmkante 26 und die Gehäusewand 30 schließen mit der Horizontalen jeweils einen Winkel b von ungefähr 12° bis 20°, vorzugsweise 16° ein, wobei allerdings die Oberseite 28 der Abströmkante 26 und die Gehäusewand 30 geringfügig geneigt zueinander verlaufen, damit der Einlaufkanal 12a bei voll aufgedrehter Leitschaufel 20 eine geringfügige Querschnittsverengung in Strömungsrichtung erfährt.

Wenn auch theoretisch eine Belüftung des Seitenraumes 40 zur Aufrechterhaltung eines bestimmten Pegels im Abströmkohr 18 ausreichen müßte, hat sich jedoch in der Praxis gezeigt, daß durch die Drehbewegung des Laufrads bedingte Verwirbelungsverluste im Seitenraum 42 dadurch vermindert werden können, daß der Seitenraum 42 ebenfalls von der Atmosphäre her belüftet wird. Zu diesem Zweck ist am Seitenraum 42 eine Leitung 48 angeschlossen, die zweckmäßigerweise ebenfalls über das Belüftungsventil 46 von der Atmosphäre belüftet wird.

Im Betrieb strömt das Wasser vom Zuströmrohr 16 horizontal dem Einlauf 12 zu, wo der Wasserstrom von der sich über die gesamte Breite des Einlaufes erstreckenden Leitschaufel 20 in zwei Teilströme unterteilt wird, die durch die Einlaufkanäle 12a und 12b verlaufen und sich hinter der Abströmkante 26 wieder vereinigen. Der vereinigte Strom tritt in dem Bereich zwischen der Abströmkante 26 und dem unteren Ende der Gehäusewand 30 in das Laufrad 2 ein. Wie durch einen Pfeil 50 angedeutet, ist die Strömungsrichtung hierbei so, daß die Resultierende der Strömung mit der Horizontalen einen Winkel a von ungefähr 30° bis 50°, vorzugsweise 40° einschließt. Es versteht sich, daß die Geometrie des Strömungskanals und der Schaufeln 4 des Laufrads 2 sowie die Drehzahl des Laufrads 2 so gewählt sind, daß die Strömung praktisch stoßfrei in das Laufrad 2 eintritt.

Wie durch eine gestrichelte Linie angedeutet, verläuft die Strömung im Inneren des Laufrades 2 außermittig, und sie tritt dann im Bereich des unteren Scheitelpunkts des Laufrads aus dem Laufrad wieder aus. Hierbei hat die Resultierende der Strömung eine im wesentlichen vertikal nach unten zeigende Richtung, wie durch einen Pfeil 52 veranschaulicht wird.

Der Einlaufkanal 12b wird von der geradlinig ausgebildeten Unterseite 32 des Nasenabschnitts 24 und der gegenüberliegenden Oberseite 36 einer Gehäusewand 34 begrenzt. Die Unterseite 32 des Nasenabschnitts 24 und die Oberseite 36 der Gehäusewand 34 schließen bei voll aufgedrehter Leitschaufel 20 mit der Horizontalen jeweils einen Winkel c von ungefähr 40° bis 50°, vorzugsweise 45° ein, wobei jedoch auch in diesem Fall der Einlaufkanal 12b sich in Strömungsrichtung zur Beschleunigung der Strömung geringfügig verengt.

Die Leitschaufel 20 ist aus ihrer (in der Zeichnung dargestellte1) voll aufgedrehten Stellung durch Zwischenstellungen hindurch in eine Schließstellung bewegbar, in der die Abströmkant6 26 an der Gehäusewand 30 und der Nasenabschnitt 24 an der Gehäusewand 34 anliegt und somit den Einlauf 12 verspert.

Der Austrittsbereich 14 besitzt auf der (in der Zeichnung) rechten Seite einen erweiterten Seitenraum 40, der durch eine bogenförmig gekrümmte Gehäusewand gebildet wird. Auf der linken Seite befindet sich ein—etwas kleinerer—Seitenraum 42, der von der Unterseite 44 der Gehäusewand 34 sowie einer vertikalen Wand des Gehäuses 8 begrenzt wird. Die Seitenräume 40, 42 erweitern den Querschnitt des Gehäusekanals 10 auf den Querschnitt des Abströmkanals 18, der theoretisch unendlich groß sein sollte und in der Praxis mehr als doppelt so groß wie der Eintrittsquerschnitt des Einlaufs 12 ist.

Damit der Pegel des Wassers im Abströmrohr 18 nicht über den untersten Punkt des Laufrads 2 ansteigt, wird der Seitenraum 40 über ein federbelastetes Lüftungsventil 46 von der Atmosphäre her belüftet, so daß der Unterdruck in dem Seitenraum 40 nicht unter einen vorgegebenen Wert absinken kann.

Im Einlaufkanal 12a verläuft somit die Resultierende der Strömung schräg nach unten unter einem Winkel b von ca. 12° bis 20°, vorzugsweise 16° zur Horizontalen, während die Resultierende der Strömung im Einlaufkanal 12b schräg nach oben unter einem Winkel c von ungefähr 40° und 50°, vorzugsweise 45° zur Horizontalen verläuft. Hierdurch werden die gewünschten Zu- und Abströmverhältnisse am Laufrad 2 erzielt.

In den Zwischenstellungen der Leitschaufel 20, also im Teillastbereich, ist der Strömungsverlauf—zumindest theoretisch—der gleiche.

Aufgrund dieses Strömungsverlaufs, insbesondere wegen des vertikalen Strömungsaustritts, und aufgrund der Doppelbelüftung des Austrittsbereiches ergeben sich eine Verringerung der Abströmung- und Verwirbelungsverluste im Austrittsbereich 14 und somit ein hoher Strömungswirkungsgrad.

**Patentansprüche**

1. Durchströmturbine mit einem stoßfrei angeströmten Laufrad, das radial von außen nach innen, im Inneren außermittig und dann radial von innen nach außen durchströmt wird, einem das Laufrad aufnehmenden Gehäusekanal, der einen Einlauf (12) sowie einen Austrittsbereich (14) aufweist, einer im Einlauf drehbar angeordneten Leitschaufel 20, die einen vorderen Nasenabschnitt und eine dazu schräg verlaufende Abströmkante aufweist und die den Einlauf in einer Schließstellung durch Anlage an gegenüberliegenden Gehäusewänden verschließt und den Einlauf in ihren übrigen Stellungen in zwei Einlaufkanäle unterteilt, einem am Einlauf angeschlossenen Zuströmrohr (16) und einem am Austrittsbereich angeschlossenen Abströmrohr (18), das vertikal verläuft und als Saugrohr ausgebildet ist, dadurch gekennzeichnet, daß bei Verwendung eines horizontal verlaufenden Zuströmrohrs (16) der Gehäusekanal (10) und die Leitschaufel (20) so ausgebildet sind, daß bei voll aufgedrehter Leitschaufel (24, 20) die Oberseite (28) der Abströmkante (26) und die dazu benachbarte Gehäusewand (30) in Strömungsrichtung nach unten verlaufend unter einem Winkel (b) von 12° bis 20°, vorzugsweise 16° zur Horizontalen geneigt sind und die Unterseite (32) des Nasenabschnittes (24) und die dazu benachbarte Gehäusewand (34) in Strömungsrichtung schräg nach oben unter einem Winkel von 40° bis 50°, vorzugsweise 45° geneigt sind, so daß die Resultierende der Strömung beim Eintritt in das Laufrad (2) schräg nach unten unter einem Winkel (a) von 30° bis 50°, vorzugsweise 40° zur Horizontalen geneigt und beim Austritt aus dem Laufrad (2) im wesentlichen vertikal gerichtet ist.

2. Durchströmturbine nach Anspruch 1, bei der der Austrittsbereich des Gehäusekanals auf der dem Zuströmrohr abgewandten Seite des Laufrades einen den Querschnitt des Gehäusekanals erweiternden ersten Seitenraum aufweist, dadurch gekennzeichnet, daß der Austrittsbereich (14) des Gehäusekanals (10) auf der dem ersten Seitenraum (40) gegenüberliegenden Seite des Laufrades (2) einen den Querschnitt des Gehäusekanals (10) ebenfalls erweiternden zweiten Seitenraum (42) aufweist.

3. Durchströmturbine nach Anspruch 2, dadurch gekennzeichnet, daß der zweite Seitenraum (42) von der Unterseite (44) einer schräg nach oben verlaufenden, sich bis zum Umfang des Laufrades (2) erstreckenden Gehäusewand (34) begrenzt wird, deren Oberseite (36) zusammen mit der Leitschaufel (24) einen der beiden Einlaufkanäle (12b) begrenzt.

4. Durchströmturbine nach Anspruch 3, dadurch gekennzeichnet, daß die Unterseite (44) der schräg nach oben verlaufenden Gehäusewand (34) zur Horizontalen unter einem Winkel (d) von 50° bis 70°, vorzugsweise 60° geneigt ist.

5. Durchströmturbine nach Anspruch 3 oder 4, bei der der erste Seitenraum über ein federbelastetes Belüftungsventil zur Aufrechterhaltung eines vorgegebenen Unterdrucks von der Atmosphäre her belüftet wird, dadurch gekennzeichnet, daß der zweite Seitenraum (42) ebenfalls zur Aufrechterhaltung eines vorgegebenen Unterdrucks von der Atmosphäre her belüftet wird.

6. Durchströmturbine nach Anspruch 5, dadurch gekennzeichnet, daß der zweite Seitenraum (42) über eine Leitung (48) mit dem Belüftungsventil (46) des ersten Seitenraumes (40) verbunden ist.

**Revendications**

1. Turbine radiale comprenant un rotor alimenté en continu et traversé par un fluide radialement de l'extérieur vers l'intérieur, à l'intérieur d'une manière excentrique et ensuite radialement de l'intérieur vers l'extérieur, un canal de boîtier recevant le rotor et qui comprend une section d'alimentation (12) ainsi qu'une section d'évacuation (14), une pâle (20) montée (pivotante dans la section d'alimentation et comprenant une partie de nez avant et un bord d'écoulement incliné par rapport à cette partie et qui ferme la section d'alimentation dans une position de fermeture dans laquelle elle est appliquée sur des parois opposées du boîtier, ladite pâle (20) divisant dans ses autres positions la section d'alimentation en deux canaux d'alimentation, la turbine comprenant un conduit d'alimentation (16) relié à la section d'alimentation et un conduit d'évacuation relié à la section d'évacuation et qui s'étend en direction verticale et forme un conduit d'aspiration, caractérisée en ce que lors de l'utilisation d'un conduit d'alimentation (16) s'étendant horizontalement, le canal de boîtier (10) et la pêle de guidage (20) sont conformés d'une manière telle qu'avec la pâle de guidage (24, 20) en position d'ouverture totale, la face supérieure (28) du bord d'écoulement (26) et la paroi de boîtier correspondante (30) forment, vues dans le sens de l'écoulement et vers le bas, un angle (b) de l'ordre de 12° à 20°, de préférence de 16°, par rapport à l'horizontale et que la face inférieure (32) de la partie de nez (24) et la paroi de boîtier correspondante (34) forment, vues dans le sens de l'écoulement et vers le haut, un angle de l'ordre de 40° à 50°, de préférence de 45°, de sorte que la résultante de l'écoulement lors de son arrivée dans le rotor (2), est inclinée vers le bas d'un angle de l'ordre de 30° à 50°, de préférence de 40°, par rapport à l'horizontale et, lors de sa sortie du rotor (2), elle s'étend sensiblement en direction verticale.

2. Turbine radiale suivant la revendication 1, dans laquelle la section d'évacuation du canal de boîtier présente à l'extrémité opposée au tube d'alimentation du rotor une première chambre latérale élargissant la section du canal de boîtier, caractérisée en ce que la section d'évacuation (14) du canal de boîtier (10) présente à l'extrémité opposée à la première chambre latérale (40) du rotor (2), une deuxième chambre latérale (42) élargissant également la section du canal de boîtier (10).

3. Turbine radiale suivant la revendication 2, caractérisée en ce que la deuxième chambre latérale (42) est délimitée par une paroi de boîtier (34) s'étendant par sa face inférieure (44) en biais vers le haut jusqu'à la périphérie du rotor (2) et dont la face supérieure (32) délimite ensemble avec la pâle de guidage (24) l'un des deux canaux d'alimentation (12b).

4. Turbine radiale suivant la revendication 3, caractérisée en ce que la face inférieure (44) de la paroi de boîtier (34) s'étendant en biais vers le haut est inclinée par rapport à l'horizontale d'un angle (d) de l'ordre de 50° à 70°, de préférence de 60°.

5. Turbine radiale suivant l'une quelconque des revendications 3 ou 4, dans laquelle la première chambre latérale est reliée à l'atmosphère libre par une soupape d'aération chargée par un ressort pour maintenir un vide prédéterminé, caractérisée en ce que la deuxième chambre latérale (42) est également reliée à l'atmosphère libre pour maintenir un vide prédéterminé.

6. Turbine radiale suivant la revendication 5, caractérisée en ce que la deuxième chambre latérale (42) est reliée par une canalisation (48) à la soupape d'aération (46) de la première chambre latérale (40).

### Claims

1. A cross-flow turbine comprising an impeller, the fluid entering the impeller in an impact free manner and the fluid flowing through the impeller radially from the outside to the inside thereof, past the axis of the impeller and then radially from the inside to the outside thereof, a housing passage receiving the impeller and comprising an inlet (12) and an outlet area (14), a guide vane (20) pivotally mounted in the inlet, the guide vane having a leading nose portion and a trailing tail portion extending obliquely to the nose portion, the guide vane closing the inlet by engaging opposite casing walls when the guide vane is in a closing position and dividing the inlet into a pair of inlet passages when the guide vane is in other positions, an admission tube (16) connected to the inlet, and a discharge tube (18) connected to the outlet area and extending vertically and being formed as a draft tube, characterized in that, with a horizontally extending admission tube (16) being used, the housing passage (10) and the guide vane (20) are arranged such that, when the guide vane (24, 20) is in its fully opened position, the upper side (28) of the trailing tail portion (26) and the associated casing wall (30) are inclined downwardly at an angle (b) of 12° to 20°, preferably 16°, with respect to the horizontal, and the lower (32) of the nose portion (24) and the adjacent casing wall (34) are inclined upwardly at an angle of 40° to 50°, preferably 45°, such that the resultant of the flow entering the impeller (2) is inclined downwardly under an angle (a) of 30° to 50°, preferably 40° with respect to the horizontal and the resultant of the flow leaving the impeller is directed substantially vertically.

2. The cross-flow turbine of claim 1, wherein the outlet area of the casing passage comprises a first side space increasing the cross-section of the casing passage at the side of the impeller remote from the admission tube, characterized in that the outlet area (14) of the casing passage (10) comprises a second side space (42) increasing the cross-section of the casing passage (10) on the other side of the impeller (2) opposite to the first side space (40).

3. The cross-flow turbine of claim 2, characterized in that the second side space (42) is confined by the lower side (44) of a casing wall (34) inclined upwardly and extending to the periphery of the impeller (2), the upper side (36) of the casing wall together with the guide vane (24) confining one (12b) of the two inlet passages.

4. The cross-flow turbine of claim 3, characterized in that the lower side (44) of the casing wall (34) inclined upwardly is inclined with respect to the horizontal under an angle (d) of 50° to 70°, preferably 60°.

5. The cross-flow turbine of claim 3 or claim 4, wherein the first side space is vented from atmosphere by a resiliently biased venting valve to maintain a predetermined suction pressure therein, characterized in that the second side space (42) is also vented from atmosphere to maintain a predetermined suction pressure therein.

6. The cross-flow turbine of claim 5, characterized in that the second side space (42) is connected to the venting valve (46) of the first side space (40) by means of a conduit (48).